# FASCICULE DE BREVET EUROPEEN

(11) **EP 0 777 045 B1**
(45) Date de publication et mention de la délivrance du brevet: **29.08.2001**
(21) Numéro de dépôt: 96402564.7
(22) Date de dépôt: 28.11.1996
(51) Int. Cl.: F02K 1/70

(54) **Inverseur de poussée de turboréacteur à portes à panneau arrière articulé**
Schubumkehrvorrichtung mit Klappen und an dem Hinterteil verbundenen Hilfsklappen
Thrust reverser with doors with linked rear panel

(30) Priorité: 30.11.1995 FR 9514137
(43) Date de publication de la demande: 04.06.1997
(73) Titulaire: HISPANO-SUIZA AEROSTRUCTURES, 76700 Gonfreville l'Orcher (FR)
(72) Inventeur: Vauchel, Guy Bernard, 76610 Le Havre (FR); Gonidec, Patrick, 76290 Montivilliers (FR)
(74) Mandataire: Berrou, Paul

(56) Documents cités:
- EP-A- 0 365 425
- EP-A- 0 542 624
- EP-A- 0 728 933
- WO-A-93/16279
- FR-A- 2 651 021
- US-A- 4 557 441
- US-A- 5 243 817

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

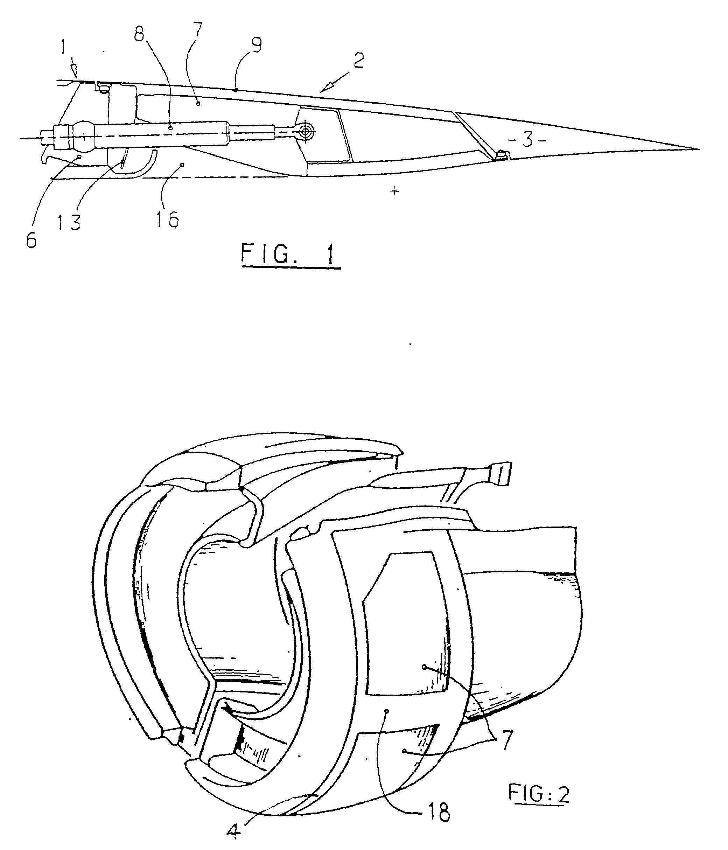

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point),
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou de réduire la masse de ce type d'inverseur ou en améliorer les performances en jet inversé. Ces buts sont atteints conformément à l'invention par un inverseur de poussée à portes pivotantes du type précité caractérisé en ce que chaque porte comporte en aval un élément arrière articulé sur la porte, la face interne dudit élément arrière constituant en jet direct une partie de la paroi extérieure du conduit de circulation du flux de manière à ce que les efforts exercés par le flux sur ledit élément arrière tendent à maintenir la porte dans sa position non déployée.

D'autres caractéristiques et avantages de l'invention seront mieux compris à la lecture de la description qui va suivre d'un mode de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1 un inverseur de poussée à portes pivotantes, en position jet direct, selon un mode de réalisation de l'invention ;
- la figure 4 représente l'inverseur de poussée représenté sur la figure 3 en position jet inversé ;
- la figure 5 représente, dans une vue analogue à celles des figures 1 et 3 un inverseur de poussée à portes pivotantes, en position de jet direct, selon une variante de réalisation de l'invention
- la figure 6 représente, dans une vue analogue à celle de la figure 4, l'inverseur de poussée représenté sur la figure 5 en position de jet inversé ;
- la figure 7 représente, selon une vue éclatée en perspective la bielle d'entraînement de l'élément arrière de porte et le joint associé en position de jet direct ;
- la figure 8 représente selon une vue analogue à celle de la figure 7 les éléments représentés sur la figure 7 en position de jet inversé.

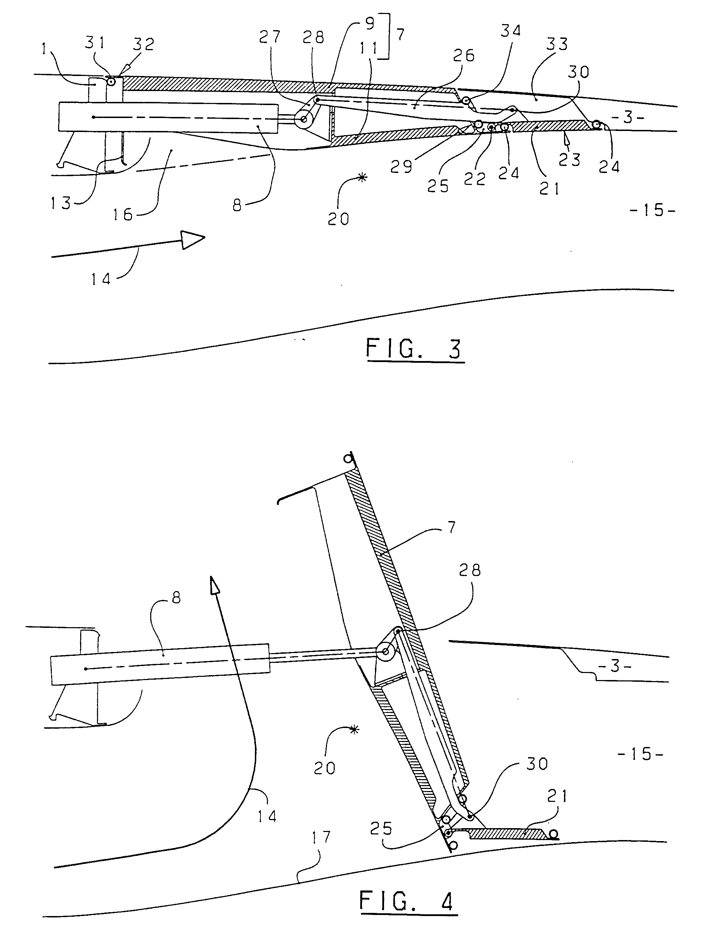

Selon un mode de réalisation de l'invention représenté sur les figures 3 et 4, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 comportant la partie extérieure 9, la partie intérieure 11, un becquet 13 et associées à un vérin de commande 8, et la partie aval 3.

De manière remarquable et conforme à l'invention, la partie intérieure 11 de la porte 7 est prolongée en aval par un élément arrière 21 articulé à son extrémité amont sur la porte 7 au moyen d'un axe pivot 22. Selon le mode de réalisation représenté sur les figures 3 et 4, ledit élément arrière 21 est constitué par un panneau dont la surface intérieure 23, disposée en jet direct dans le prolongement des surfaces intérieures respectives de la partie intérieure 11 de la porte 7 et de la partie aval 3 de l'inverseur. Des joints d'étanchéité tels que 24 sont disposés aux extrémités du panneau arrière 21 et peuvent être montés soit sur le panneau 21 soit sur la porte 7 et la partie aval 3 de structure. Ledit panneau arrière 21 forme ainsi une partie de la paroi externe de veine du conduit annulaire 15. L'axe de rotation 22 peut être associé à une charnière 25 disposée dans l'axe géométrique de la porte 7. On peut également de manière préférentielle utiliser deux pivots situés de part et d'autre de l'axe médian de la porte 7. Dans l'exemple de réalisation représenté sur les dessins, la charnière 25 est associée à la partie interne 11 de la porte 7 mais l'emplacement de la charnière 25 peut se trouver dans une zone comprise entre la partie interne 11 et la partie externe 9 de l'arrière de la structure arrière de la porte 7.

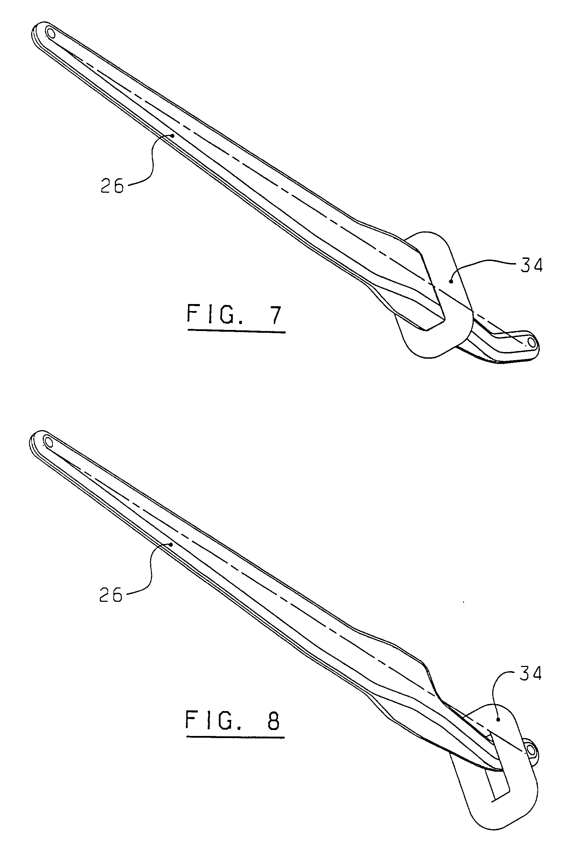

Pour passer de la configuration de jet direct représentée sur la figure 3 à la configuration de jet inversé représentée sur la figure 4, la porte 7, articulée autour de l'axe de rotation 20 entraîne par l'intermédiaire d'un moyen mécanique, telle que la bielle 26 dans l'exemple de réalisation représenté sur les figures 3 et 4, le panneau arrière 21 pivotant autour de l'axe de rotation 22 et de la charnière 25. La surface et la forme du panneau arrière 21 sont définies pour que, associées avec la zone aval de la partie interne 11 de la porte 7, l'ensemble porte et panneau arrière sous l'action du flux dans le conduit annulaire 15, en jet direct, se trouve en position équilibrée ou fermante, évitant tout risque de déploiement intempestif. Ladite bielle 26 est reliée à la tête 27 du vérin 8 de manoeuvre de la porte 7 par l'intermédiaire d'un axe 28. La bielle 26 traverse la structure arrière de la porte 7 par une ouverture 29. La bielle 26 entraîne le panneau arrière 21 par l'intermédiaire d'un point d'accrochage 30. La rotation du panneau arrière 21 autour de son axe 22 pour passer de la position en jet direct représentée sur la figure 3 à la position en jet inversé représentée sur la figure 4 est obtenue par le différentiel créé entre l'angle de manoeuvre de la porte 7 et la direction quasi rectiligne de la tête 27 du vérin 8. Dans l'exemple de réalisation schématiquement représenté sur la figure 4, la déviation du flux inversé représenté par la flèche 14 est assurée par la partie interne 11 de la porte 7 dont le bord aval prend une position de coopération avec le capotage externe du moteur associé à l'inverseur de poussée ou paroi radialement interne 17 du conduit annulaire 15 tandis que le panneau arrière 21 est dans une position escamotée, en dehors du flux inversé. Dans une application où, comme dans l'exemple de réalisation représenté sur la figure 3, l'étanchéité de la porte 7 est assurée par un joint 31 disposé sur le bord amont externe 32 de la porte 7, la cavité amont 16 de la porte 7 se trouve à la pression de la veine de circulation du flux 14 dans le conduit annulaire 15 et en conséquence, une étanchéité est prévue sur l'ouverture 29 traversée par la bielle 26. De cette manière, la zone arrière 33 de la structure reste à la pression ambiante extérieure et, comme précédemment décrit, la pression de veine du flux circulant dans le conduit annulaire 15 s'exerce sur la surface intérieure 23 du panneau arrière 21. Dans ce but et comme représenté sur les figures 3 et 7, la bielle 26 présente une forme adaptée, lui permettant dans la position de jet direct d'être en contact avec un joint 34 associé à la structure de la porte 7. En déterminant la cinématique des déplacements et la forme de la bielle 26 suivant les techniques connues de l'homme du métier, pendant le passage à la phase d'inversion du jet, la bielle 26 décolle progressivement du contact dudit joint 34 pour se retrouver dans la position finale d'inversion sans contact avec lui, comme représenté sur les figures 4 et 8.
En fonction des applications toutefois et suivant la cinématique et la forme de la bielle retenue, l'étanchéité du passage de bielle à travers la structure de porte peut être réalisée pendant toute la manoeuvre et dans toutes les positions désirées.
Par ailleurs, au lieu d'être placé à l'aval de la structure de porte 7, comme représenté sur la figure 3, le joint 34 peut être placé à tout endroit de ladite structure situé entre l'axe amont 28 de la bielle 26 et l'extrémité aval de la porte 7.
Dans le cas où l'axe pivot 22 du panneau arrière 21 se trouve en partie supérieure de la structure arrière de la porte 7, le moyen mécanique d'entraînement du panneau arrière 21 devient un système poussant et le principe d'étanchéité qui vient d'être décrit, bien qu'inversé, reste identique.

Des adaptations avantageuses en fonction des résultats recherchés peuvent être apportées en conservant figées les caractéristiques géométriques d'ensemble. En effet, l'angle d'ouverture de la porte 7 peut varier ou les fuites entre le bord aval de la porte 7 et le capotage externe 17 du moteur peuvent être aménagées de manière à améliorer les performances lors du fonctionnement en inversion de poussée. La frontière entre bord aval de la partie intérieure 11 de la porte 7 et le bord amont du panneau arrière 21 peut en effet être déplacée sans affecter les qualités aérodynamiques de la paroi limitant la veine du flux en jet direct.
En fonction des applications et pour obtenir l'adaptation aux résultats recherchés, divers aménagements peuvent être apportés au panneau arrière 21 :
- forme rectangulaire,
- bords amont et aval évolutifs et/ou dissymétriques,
- largeur inférieure ou identique à celle de la porte,
- réalisation en une seule partie ou en deux parties distinctes ou en plusieurs parties avec recouvrement mutuel pour assurer l'étanchéité centrale.
Les dispositions remarquables de l'invention qui ont été décrites s'appliquent à un inverseur de poussée à portes pivotantes d'un type connu en soi tel que décrit en référence aux figures 1 et 2 représentant une solution connue antérieure de l'état de la technique. Elles peuvent également être appliquées en association avec toutes dispositions connues de lissage de veine, notamment un panneau mobile tel que décrit par US 3.605.411 ou un panneau amont décrit par EP-A-0.413.635. Dans ce dernier cas notamment, l'étanchéité créée entre le panneau amont et la cavité de porte permet de supprimer le dispositif d'étanchéité sur le passage 29 de la porte 7 puisque la zone arrière 33 et la cavité 16 de la porte 7 se trouvent dans ce cas à la même pression.

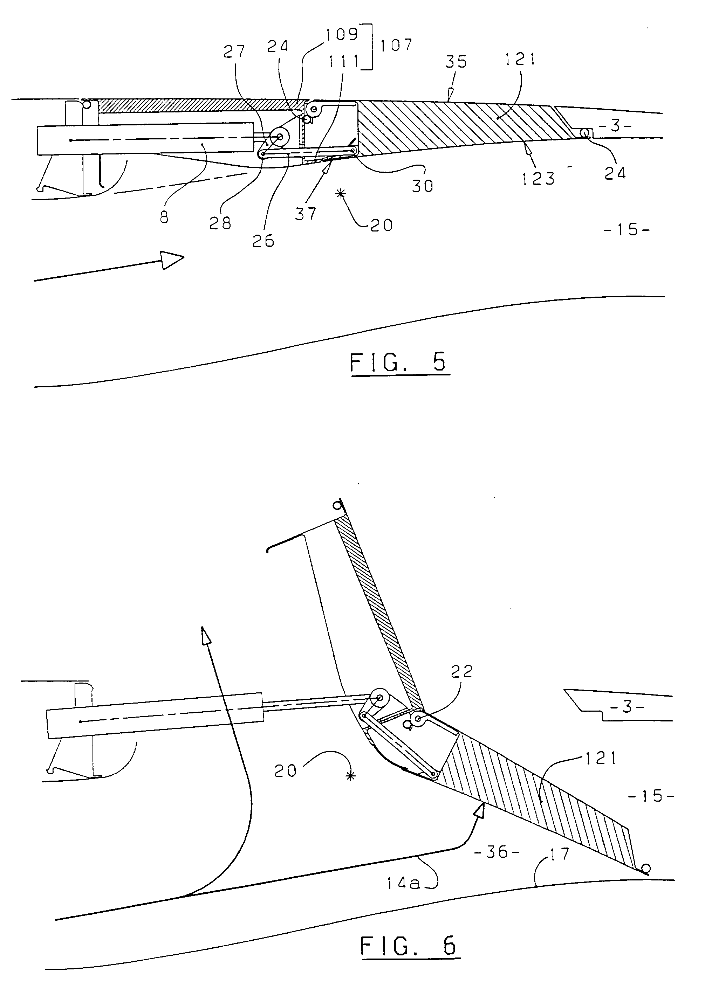

Selon une variante de réalisation de l'invention, représentée sur les figures 5 et 6, l'inverseur de poussée comporte comme précédemment les parties principales connues et précédemment décrites en référence aux figures 1 et 2. Les références précédemment utilisées pour la description du mode de réalisation de l'invention représenté sur les figures 3 et 4 sont conservées pour des éléments identiques et des références augmentées d'une centaine sont utilisées pour désigner les éléments correspondants de la présente variante. L'élément arrière 121 est dans ce cas constitué par une structure aval de porte comportant, comme précédemment, une surface intérieure 123 se raccordant, suivant la ligne aérodynamique externe de la veine circulant dans le conduit annulaire 15, avec la surface intérieure de la partie aval fixe 3 de l'inverseur. Comme précédemment, la structure amont de porte 107 comporte une partie intérieure 111 et une partie extérieure 109 et est articulée autour d'un axe de rotation 20. Un moyen mécanique telle que la bielle 26 est articulée sur la structure aval 121 en un point d'accrochage 30 et est relié à son autre extrémité à la tête 27 du vérin 8 de manoeuvre de la porte par l'intermédiaire d'un axe 28. On retrouve également les joints d'étanchéité 24 aux lignes de jonction entre la structure aval 121 et soit la partie aval 3 d'inverseur soit la structure amont de porte 107. Le joint 24 disposé entre les structures amont de porte 107 et aval 121 peut être porté par l'une ou l'autre structure. Une articulation constituée par un axe pivot 22 est disposée entre la structure aval 121 et la structure amont de porte 107.

La disposition particulière de la présente variante concerne la modification de l'élément arrière 121 dont la surface radialement extérieure 35 constitue dans ce cas une partie de la surface de nacelle et se raccorde en amont à la surface extérieure de la partie extérieure 111 de la structure amont de porte 107 et en aval à la surface extérieure de la partie fixe aval 3 de l'inverseur. La position de l'axe pivot 22 est déterminée dans ce cas de telle sorte qu'en position de jet inversé, telle que représentée sur la figure 6, une cavité 36 ouverte à une partie du flux dévié symbolisée par la flèche 14a se forme entre la surface interne 123 de la structure aval 121 de la porte et le capotage externe 17 du moteur. Il en résulte sous l'effet des efforts exercés par ce flux 14a que l'ensemble constitué par la structure amont de porte 107 et la structure aval 121 est auto-refermant. En outre, l'ensemble peut être rendu auto-fermant en position de jet direct grâce au choix de dimensions déterminées pour la surface 123 de la structure aval 121, et la position équilibrée est conservée même dans le cas d'une défaillance au niveau du joint 24.

Dans la configuration de jet direct, le pivot 22 de la structure aval 121 peut se trouver soit dans une position amont soit dans une position aval par rapport à la position de l'axe de rotation 20 de la porte 107.

Dans la position de jet inversé, l'angle entre la structure aval 121 et le capotage externe 17 du moteur est déterminé en fonction des performances recherchées. Dans la configuration de jet direct, la partie amont 37 du côté interne de la structure aval 121 peut être soit en retrait, soit en débordement par rapport aux lignes aérodynamiques externes de la veine annulaire en fonction des effets aérodynamiques recherchés.
L'invention est également applicable dans le cas non représenté sur les dessins où l'inverseur de poussée ne possède pas de partie aval fixe 3, l'extrémité de la nacelle étant dans ce cas constituée par le bord aval de l'élément arrière 121.

En fonction des applications particulières, certaines variantes de réalisation peuvent être retenues :
- l'axe de rotation 20 peut être associé à la structure aval 121 de la porte 107 ;
- le vérin de commande 8 peut avoir son point d'application sur la structure aval 121 de la porte 107 et dans ce cas, le point d'accrochage de la bielle 26 sur la structure aval 121 est situé en aval du point d'entraînement de la porte 107.
En outre, le moyen mécanique d'entraînement de l'élément arrière, constitué dans les exemples de réalisation précédemment décrits en référence aux figures 3 et 4 ou 5 et 6 par la bielle 26, peut être réalisé au moyen d'un ou plusieurs vérins d'un type connu en soi.

Selon une autre variante de réalisation, applicable aux deux exemples de réalisation de l'invention précédemment décrits respectivement en référence aux figures 3 et 4 ou 5 et 6, la bielle 26 est remplacée par un système de maintien élastique tel qu'un ressort à spirales ou tout autre système de maintien connu en soi. Ledit ensemble élastique peut donner de façon préférentielle une composante de basculement de l'extrémité aval de l'élément arrière 21 ou 121 dans le conduit 15 de flux ou dans le sens inverse. En position de jet direct, l'extrémité aval de l'élément arrière 21 ou 121 peut avoir un ou plusieurs contacts physiques avec la structure fixe aval 3 de l'inverseur, formant ainsi une butée qui peut être réglable ou non. En position d'inversion de jet, l'extrémité aval de l'élément arrière 21 ou 121 peut venir en contact sur une ou plusieurs butées sur le capotage externe du turboréacteur dans une zone définie suivant la cinématique retenue. Dans ce cas, en fonction des efforts engendrés au contact entre élément arrière et capotage moteur, une aide à la refermeture de l'élément mobile, porte et élément arrière peut être obtenue.
En outre, l'extrémité aval de l'élément arrière 21 ou 121 peut être relié par une ou plusieurs bielles au bord amont de la structure fixe aval 3 de l'inverseur, entraînant lors de l'inversion de poussée ledit élément arrière dans une position escamotée de repli.

## Revendications

1. Inverseur de poussée de turboréacteur à double flux comportant des portes pivotantes (7), susceptibles, en position fermée, lors d'un fonctionnement en jet direct, de s'intégrer dans la paroi extérieure du conduit de flux en arrière de la soufflante de turboréacteur, et susceptibles en outre chacune de pivoter sous l'action d'un moyen de commande des déplacements de manière à constituer des obstacles de déviation de flux lors d'un fonctionnement en inversion de poussée, chaque porte étant constituée d'une partie extérieure (9) et d'une partie intérieure (11)
**caractérisé en ce que** chaque porte (7) comporte en aval un élément arrière (21 ; 121) articulé sur la porte (7 ; 107), la face interne (23 ; 123), dudit élément arrière (21 ; 121) constituant en jet direct une partie de la paroi extérieure du conduit (15) de circulation du flux de manière à ce que les efforts exercés par le flux sur ledit élément arrière (21 ; 121) tendent à maintenir la porte (7 ; 107) dans sa position non déployée.

2. Inverseur de poussée de turboréacteur à double flux selon la revendication 1 dans lequel ledit élément arrière est constitué par un panneau (21) articulé à son extrémité amont sur la porte (7) au moyen d'un axe pivot (22) et entraîné par la porte (7) grâce à un moyen mécanique de liaison (26) lors du passage à une configuration de jet inversé de manière que lors du fonctionnement en inversion de poussée, ledit panneau (21) se trouve escamoté en dehors du flux, en aval de ladite porte (7).

3. Inverseur de poussée de turboréacteur à double flux selon la revendication 2 dans lequel ledit moyen mécanique est constitué par au moins une bielle (26) reliant une articulation (28) de la tête (27) du vérin (8) de manoeuvre de porte et un point d'accrochage (30) dudit panneau arrière (21), ladite bielle (26) traversant la structure arrière de la porte (7) par une ouverture (29) munie d'un joint d'étanchéité (34).

4. Inverseur de poussée de turboréacteur à double flux selon la revendication 1 dans lequel ledit élément arrière est constitué par une structure aval (121) de porte dont la surface radialement extérieure (35) constitue une partie de la surface de nacelle et se raccorde en amont à la surface extérieure de la partie extérieure (111) de la structure amont de porte (107) et en aval à la surface extérieure de la partie fixe aval (3) de l'inverseur.

5. Inverseur de poussée de turboréacteur à double flux selon la revendication 4 dans lequel une articulation constituée par un axe pivot (22) est disposée entre la structure aval (121) et la structure amont de porte (107) et un moyen mécanique de liaison (26) est disposé entre un axe d'articulation (28) solidaire de la tête (27) du vérin (8) de manoeuvre de porte et un point d'accrochage (30) de la structure aval (121) de porte.

6. Inverseur de poussée de turboréacteur à double flux selon l'une des revendications 4 ou 5 dans lequel la position dudit axe pivot (22) entre la structure aval (121) et la structure amont de porte (107) est déterminée de telle sorte qu'en position de jet inversé, une cavité (36) ouverte à une partie du flux dévié (14a) se forme entre la surface interne (123) de la structure aval (121) de porte et le capotage externe (17) de moteur.

7. Inverseur de poussée de turboréacteur à double flux selon la revendication 4 dans lequel une articulation constituée par un axe pivot (22) est disposée entre la structure aval (121) et la structure amont de porte (107) et un moyen mécanique de liaison est disposé entre un point d'entraînement amont situé sur ladite structure amont de porte (107) et un point d'accrochage situé sur la structure aval (121), le point d'application du vérin de manoeuvre étant situé sur ladite structure aval (121).

8. Inverseur de poussée de turboréacteur à double flux selon l'une quelconque des revendications 2, 5 et 7 dans lequel ledit moyen mécanique de liaison entre l'élément arrière (21 ; 121) et la porte (7 ; 107) est constitué par un vérin.

9. Inverseur de poussée de turboréacteur à double flux selon l'une quelconque des revendications 2, 5 et 7 dans lequel ledit élément arrière (21 ; 121) est maintenu en position alignée par un système élastique tel qu'un ressort à spirales constituant ledit moyen mécanique de liaison.

10. Inverseur de poussée de turboréacteur à double flux selon l'une des revendications 1 ou 9 dans lequel l'extrémité aval de l'élément arrière, en position de jet direct, vient en butée sur la structure fixe aval (3) de l'inverseur.

11. Inverseur de poussée de turboréacteur à double flux selon l'une quelconque des revendications 1, 9 et 10 dans lequel l'extrémité aval de l'élément arrière, en position d'inversion de poussée, vient en contact sur la paroi de capotage externe (17) du turboréacteur.

12. Inverseur de poussée de turboréacteur à double flux selon l'une quelconque des revendications 1 à 11 dans lequel l'extrémité aval de l'élément arrière (21 ; 121) est relié au bord amont de la structure fixe aval (3) de l'inverseur par au moins une bielle, entraînant ledit élément arrière dans une position escamotée, lors du fonctionnement en inversion de poussée.

13. Inverseur de poussée de turboréacteur à double flux selon l'une quelconque des revendications 1 à 9 dans lequel, en position de jet direct, le bord aval de l'élément arrière (21 ; 121) constitue l'extrémité de la nacelle, en l'absence d'une structure fixe aval.

## Patentansprüche

1. Schubumkehrvorrichtung für ein Zweikreis-TL-Triebwerk mit Schwenkklappen (7), die geeignet sind, sich in geschlossener Stellung im Direktstrahlbetrieb in die Außenwand der Strömungsleitung hinter dem Gebläse des TL-Triebwerks einzufügen, und ferner geeignet sind, jeweils unter Einwirkung eines Steuermittels für die Bewegungen dergestalt zu schwenken, dass sie im Schubumkehrbetrieb Umlenkhindernisse bilden, wobei jede Klappe (7) aus einem äußeren Teil (9) und einem inneren Teil (11) besteht,
**dadurch gekennzeichnet,**
**dass** jede Klappe (7) hinten ein hinteres Element (21; 121) enthält, das an der Klappe (7; 107) angelenkt ist, wobei die Innenseite (23; 123) dieses hinteren Elements (21; 121) im Direktstrahlbetrieb einen Teil der Außenwand der Strömungsleitung (15) dergestalt bildet, dass die von der Strömung auf dieses hintere Element (21; 121) ausgeübten Kräfte die Tendenz haben, die Klappe (7; 107) in ihrer nicht ausgeklappten Stellung zu halten.

2. Schubumkehrvorrichtung für ein Zweikreis-TL-Triebwerk nach Anspruch 1, wobei das genannte hintere Element von einer Platte (21) gebildet wird, die mit ihrem vorderen Ende mittels einer Drehachse (22) an der Klappe (7) angelenkt ist und beim Übergang in eine Umkehrschub-Konfiguration von der Klappe (7) dergestalt durch ein mechanisches Verbindungsmittel (26) mitgenommen wird, dass diese Platte (21) im Umkehrschubbetrieb außerhalb des Stroms, hinter dieser Klappe (7) ausgeklappt ist.

3. Schubumkehrvorrichtung für ein Zweikreis-TL-Triebwerk nach Anspruch 2, wobei das genannte mechanische Mittel aus mindestens einer Stange (26) besteht, die ein Gelenk (28) des Kopfs (27) des Klappensteuerzylinders (8) mit einer Befestigungsstelle (30) dieser hinteren Platte (21) verbindet, wobei diese Stange (26) durch eine mit einer Dichtung (34) versehenen Öffnung (29) hindurch quer durch den hinteren Aufbau der Klappe (7) verläuft.

4. Schubumkehrvorrichtung für ein Zweikreis-TL-Triebwerk nach Anspruch 1, wobei das genannte hintere Element aus einem hinteren Klappenaufbau (121) besteht, dessen radial äußere Fläche (35) einen Teil der Triebwerkgondelfläche bildet und sich vorne an die Außenfläche des äußeren Teils (111) des vorderen Aufbaus der Klappe (107) und hinten an die Außenfläche des hinteren, festen Teils (3) der Umkehrvorrichtung anschließt.

5. Schubumkehrvorrichtung für ein Zweikreis-TL-Triebwerk nach Anspruch 4, wobei ein aus einer Drehachse (22) bestehendes Gelenk zwischen dem hinteren Klappenaufbau (121) und dem vorderen Aufbau der Klappe (107) angeordnet ist und ein mechanisches Verbindungsmittel (26) zwischen einer Gelenkachse (28), die mit dem Kopf (27) des Klappensteuerzylinders (8) fest verbunden ist, und einer Befestigungsstelle (30) des hinteren Klappenaufbaus (121) angeordnet ist.

6. Schubumkehrvorrichtung für ein Zweikreis-TL-Triebwerk nach einem der Ansprüche 4 oder 5, wobei die Stellung der Drehachse (22) zwischen dem hinteren Klappenaufbau (121) und dem vorderen Aufbau der Klappe (107) dergestalt bestimmt wird, dass sich bei Umkehrschubstellung zwischen der Innenfläche (123) des hinteren Aufbaus (121) der Klappe und der Auβenverkleidung (17) des Triebwerks ein Hohlraum (36) bildet, der für einen Teil des umgelenkten Stroms (14a) offen ist.

7. Schubumkehrvorrichtung für ein Zweikreis-TL-Triebwerk nach Anspruch 4, wobei ein aus einer Drehachse (22) bestehendes Gelenk zwischen dem hinteren Klappenaufbau (121) und dem vorderen Aufbau der Klappe (107) angeordnet ist und ein mechanisches Verbindungsmittel (26) zwischen einem vorderen Mitnehmerpunkt, der sich an diesem vorderen Aufbau der Klappe (107) befindet, und einer Befestigungsstelle (30) an dem hinteren Klappenaufbau (121) angeordnet ist, wobei der Angriffspunkt des Steuerzylinders sich an diesem hinteren Klappenaufbau (121) befindet.

8. Schubumkehrvorrichtung für ein Zweikreis-TL-Triebwerk nach einem der Ansprüche 2, 5 und 7, wobei das genannte mechanisches Verbindungsmittel zwischen dem hinteren Element (21; 121) und der Klappe (7; 107) aus einem Zylinder besteht.

9. Schubumkehrvorrichtung für ein Zweikreis-TL-Triebwerk nach einem der Ansprüche 2, 5 und 7, wobei dieses hinteren Element (21; 121) durch ein federndes System wie z. B. eine Spiralfeder, die dieses mechanische Verbindungsmittel bildet, in ausgerichteter Stellung gehalten wird.

10. Schubumkehrvorrichtung für ein Zweikreis-TL-Triebwerk nach einem der Ansprüche 1 oder 9, wobei das hintere Ende des hinteren Elements bei Direktstrahlstellung in Anschlag an dem hinteren, festen Teil (3) der Umkehrvorrichtung kommt.

11. Schubumkehrvorrichtung für ein Zweikreis-TL-Triebwerk nach einem der Ansprüche 1, 9 und 10, wobei das hintere Ende des hinteren Elements bei Umkehrschubstellung in Kontakt an der Wand der Außenverkleidung (17) des Triebwerks kommt.

12. Schubumkehrvorrichtung für ein Zweikreis-TL-Triebwerk nach einem der Ansprüche 1 bis 11, wobei das hintere Ende des hinteren Elements (21; 121) mit der Vorderkante des hinteren, festen Teils (3) der Umkehrvorrichtung durch mindestens eine Stange verbunden ist, die dieses hintere Element im Umkehrschubbetrieb in eine ausgeklappte Stellung mitnimmt.

13. Schubumkehrvorrichtung für ein Zweikreis-TL-Triebwerk nach einem der Ansprüche 1 bis 9, wobei die Hinterkante des hinteren Elements (21; 121) bei Direktstrahlstellung das Ende der Triebwerkgondel bildet, sofern kein hinterer, fester Aufbau vorhanden ist.

## Claims

1. A bypass turbojet engine thrust reverser comprising pivoting doors (7) adapted, when closed in forward thrust operation, to be incorporated in the outer wall of the flow duct aft of the engine fan, each door being adapted to pivot, when actuated by drive means, so as to form flow-diverting obstacles in reverse thrust operation, each door consisting of an outer part (9) and an inner part (11), **characterised in that** each door (7) comprises downstream an aft element (21; 121) pivoted on the door (7; 107), the inner face (23; 123) of said aft element (21; 121) forming in forward thrust operation a part of the outer wall of the flow duct (15) so that the forces exerted by the flow on said aft element tend to maintain the door (7; 107) in its undeployed position.

2. A bypass turbojet engine thrust reverser according to claim 1, wherein said aft element consists of a panel (21) articulated at its upstream end to the door (7) by means of a pivot (22) and driven by the door (7) by way of mechanical connecting means (26) during the change-over to a reverse thrust configuration so that in reverse thrust operation said panel (21) is stowed outside the flow downstream of said door (7),

3. A bypass turbojet engine thrust reverser according to claim 2, wherein said mechanical means consists of at least one rod (26) connecting an articulation (28) on the head (27) of the door-actuating ram (8) to a connection point (30) on said aft panel (21), said rod (26) extending through the aft structure of the door (7) by way of an aperture (29) having a seal (34).

4. A bypass turbojet engine thrust reverser according to claim 1, wherein said aft element consists of a downstream door structure (121) whose radially outer surface (35) forms a part of the nacelle surface and corresponds upstream to the outer surface of the outer part (109 ― sic. 111) of the upstream door structure (107) and downstream to the outer surface of the fixed downstream part (3) of the reverser.

5. A bypass turbojet engine thrust reverser according to claim 4, wherein an articulation comprising a pivot (22) is disposed between the downstream door structure (121) and the upstream door structure (107), and a mechanical connecting means (26) is disposed between a pivot (28) rigidly secured to the head (27) of he door-actuating ram (8) and a connection point of the downstream door structure (121).

6. A bypass turbojet engine thrust reverser according to claim 4 or claim 5, wherein the position of said pivot (22) between the downstream door structure (121) and the upstream door structure (107) is so determined that in the reverse thrust position a cavity (36) open to a proportion of the diverted flow (14a) forms between the inner surface (123) of the downstream door structure (121) and the outer fairing (17) of the engine.

7. A bypass turbojet engine thrust reverser according to claim 4, wherein an articulation comprising a pivot (22) is disposed between the downstream door structure (121) and the upstream door structure (107), and a mechanical connecting means is disposed between an upstream drive point disposed on said upstream door structure (107) and a connecting point disposed on the downstream structure (121), the point of application of the actuating ram being disposed on said downstream structure (121),

8. A bypass turbojet engine thrust reverser according to any of claims 2, 5 and 7, wherein said mechanical connecting means between the aft element (21; 121) and the door (7; 107) consists of a ram.

9. A bypass turbojet engine thrust reverser according to any of claims 2, 5 and 7, wherein said aft element (21; 121) is maintained in alignment by a resilient system such as a spiral spring comprising said mechanical connecting means.

10. A bypass jet engine thrust reverser according to claim 1 or claim 9, wherein in forward thrust operation the downstream end of the aft element abuts the fixed downstream structure (3) of the reverser.

11. A bypass turbojet engine thrust reverser according to any of claims 1, 9 and 10, wherein in the reverse thrust position the downstream end of the aft element contacts the outer fairing wall (17) of the engine.

12. A bypass turbojet engine thrust reverser according to any of claims 1 to 11, wherein the downstream end of the aft element (21; 121) is connected to the upstream edge of the fixed downstream structure (3) of the reverser by at least one rod which drives the aft element into a stowed position in reverse thrust operation.

13. A bypass turbojet engine thrust reverser according to any of claims 1 to 9, wherein in the forward thrust position the downstream edge of the aft element (21; 121) comprises the end of the nacelle in the absence of a fixed downstream structure.
